# EUROPEAN PATENT APPLICATION

(11) **EP 1 225 429 A1**
(43) Date of publication of application: **24.07.2002**
(21) Application number: 02000873.6
(22) Date of filing: 15.01.2002
(51) Int. Cl.: G01G 11/12

(54) **Metering method for substances and relative metering device**

(30) Priority: 17.01.2001 IT UD010010
(71) Applicant: PAVAN S.p.A., 35015 Galliera Veneta (Padova) (IT)
(72) Inventor: Siviero, Giovanni, 36028 Rossano Veneto (VI) (IT); Rasera, Sandro, 31041 Cornuda (TV) (IT)
(74) Representative: Petraz, Gilberto

(57) **Abstract**

Metering device (10) for substances, for example raw materials, semi-finished pieces or ingredients in a mixture, formed by at least a container (11) to feed the material, extraction means (15) associated in the lower part with the outlet of the container (11) and weight detection means (19) associated at least with the container (11) and able to detect the weight losses caused by the discharge of the material, wherein the weight detection means (19) are connected to an inlet of a PLC-type processing and control unit (21) by means of at least a signal conversion unit (20) and at least a communication interface unit (23), and an outlet of the PLC-type processing and control unit (21) is connected to a motor (16) of the extraction means (15) by means of at least a communication interface unit (24) and a device (25) to regulate the speed of the motor (16).

## Description

### FIELD OF THE INVENTION

The invention concerns a metering method for substances, for example raw materials, semi-finished pieces, ingredients in a mixture or suchlike, and also the metering device suitable to achieve said method.

The invention can be applied substantially in every field where it is necessary to make a load, metered according to unit of time, of precise quantities of substances or ingredients to be fed to a particular treatment, for example a mixing treatment with other substances in a kneading machine or extrusion machine.

However, it can be applied to particular advantage in the field of pasta production or other similar food products, such as for example snacks, children's food, potato chips or similar.

### BACKGROUND OF THE INVENTION

In various industrial fields, there is a well-known need to feed a determined and precise quantity of one or more substances or products to a processing machine or plant, over a period of time or in defined quantities, in order to mix, knead, extrude, or draw the substances, or other required processes.

To feed particular materials in appropriately metered quantities, the use of metering devices is known which, according to the metering system adopted, are divided into two main categories: gravimetric and volumetric.

In the first category we find that type of device wherein the feed of the material to be metered is regulated by means of control signals supplied by weighing elements, which are able to detect, at pre-set intervals, the loss of weight of the container from which the product is unloaded. The signals are used to regulate the speed of extraction of the product from the container in order to establish as regular and constant a flow as possible.

There are various types of gravimetric metering devices on the market, which substantially comprise a mechanical part and an electric command panel. The mechanical part normally comprises a hopper, possibly associated with a stirrer member, which cooperates in the lower part with an extraction screw. The entire structure is supported by means of a system comprising weighing means, normally of the load cell type, connected to the electric panel to send signals relating to the loss of weight of the hopper which feeds the product.

The electric panel comprises a power part, to command the motors with variable rpm, and a control part, which can be programmed and personalized, to manage the weight and hence the metering of the product.

A first problem with conventional gravimetric metering devices is that the electric panel is often very complex and expensive, it can be installed only by specialists, the relative management software can be modified only by the manufacturers and not by the users, assistance and spares must be managed only by the manufacturers.

Therefore, every little malfunction or other type of problem entails long downtimes of the machine, with considerable loss of productivity.

Another shortcoming of conventional gravimetric metering devices is the effect of the disturbances to the weight signals caused by the vibrations introduced by the various devices of the plant; such disturbances affect the correctness of the metering and feed of the substances.

The present Applicant has devised and embodied this invention to overcome these shortcomings and to obtain other advantages as shown hereafter.

### SUMMARY OF THE INVENTION

The invention is set forth and characterized in the respective main claims, while the dependent claims describe other additional characteristics of the invention.

The main purpose of the invention is to achieve a gravimetric-type metering device wherein the electric power and control part can be made entirely with components freely available on the market, in order to allow any necessary assistance, replacements or maintenance to be made even by the final users.

Another purpose is to adopt a method to control and manage the metering wherein the weight signals detected by the weighing means associated with the product container can be processed in such a manner as to eliminate any possible disturbance or spurious signal, thus optimizing the regularity and precision of feed.

In accordance with these purposes, a gravimetric metering device according to the invention comprises a substantially conventional mechanical part, consisting of at least a hopper to feed the material, possibly associated with at least a stirrer member, extraction means, normally a screw or belt, associated in the lower part with the outlet from said hopper and weight detection means associated at least with said hopper and able to detect the weight losses caused by the discharge of the material.

According to one characteristic of the invention, said weight detection means are connected to an inlet of a PLC-type processing and control unit by means of at least a signal conversion unit and at least a communication interface unit, and an outlet of said PLC-type processing and control unit is connected to a motor of said extraction means by means of at least a communication interface unit and a device to regulate the speed of said motor.

According to a variant, one outlet of said processing and control unit is connected to the motor of said stirrer member by means of at least a communication interface unit and a device to regulate the speed.

According to another variant, the motor of the stirrer member works at a fixed speed.

Said PLC-type processing unit is suitable to receive the weight values as obtained from the electric signals transmitted by the load cells, to process them by means of an appropriate calculation algorithm, and to supply at output a command signal to regulate the speed of the motor of the extraction means and/or the stirrer member in order to maintain the quantity of material fed by the metering device at a desired value.

According to the invention, the processing performed by said calculation algorithm provides:
- at least a step of filtering the signals arriving from the weight detection means;
- the quantity of material unloaded from the metering device in terms of material flow (unit of weight per unit of time, for example kg/h) is obtained from said weight signals and the flow signal thus obtained is filtered;
- said filtered flow signal is sent, together with a filtered signal relating to the set point metering value set by the operator, to a unit to regulate the speed of the motor of the extraction means;
- the value relating to the flow signal and the set point value are compared by said regulation unit, in order to output in feedback a signal to possibly correct the speed of the motor of the extraction means in the event that said values be different.

In one solution of the invention, said processing and control unit is connected on line, by means of a communication interface such as a modem or similar, to a centralized management and control system, by means of which it is possible to perform diagnostic and control procedures, and possibly to intervene to make modifications.

In one embodiment of the invention, the PLC-type processing and control unit is suitable to activate periodic cycles to fill the hopper, de-activating the gravimetric control, when the residual material inside the hopper has reached a pre-determined minimum level and until the material reaches a pre-determined maximum level again.

### BRIEF DESCRIPTION OF THE DRAWINGS

These and other characteristics of the invention will become clear from the following description of the preferential form of embodiment, given with reference to the attached drawings wherein:
Fig. 1 shows a diagram of the principle of the gravimetric metering device according to the invention;
Fig. 2 shows a flow chart of the metering control method according to the invention;
Fig. 3 shows more specifically the flow chart of the control algorithm of the method according to the invention.

### DETAILED DESCRIPTION OF PREFERENTIAL EMBODIMENT

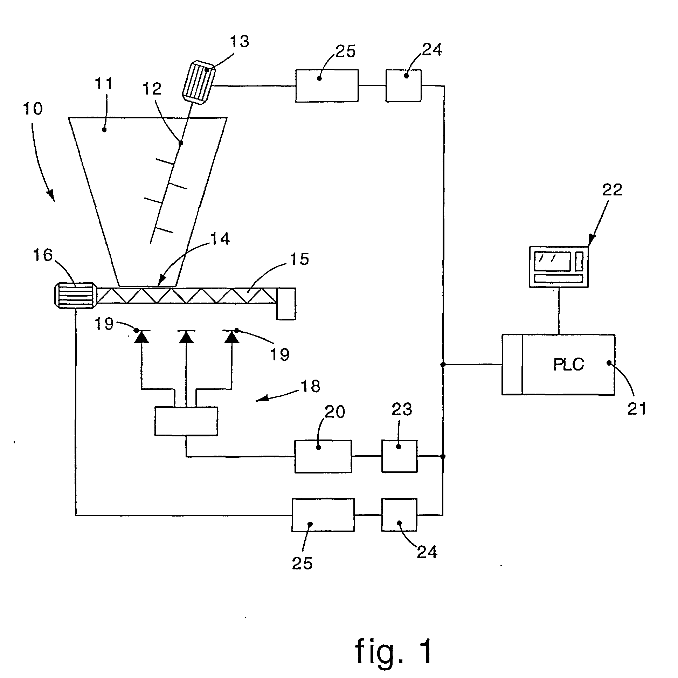

With reference to Fig. 1, a gravimetric metering device 10 for substances and products comprises a hopper-type container 11 with a substantially vertical axis inside which the material which has to be fed in precisely metered quantities is loaded.

Inside the hopper 11 there is a stirrer member 12 with blades, associated with its own motor 13, the function of which is to regulate the descent of the material towards the lower outlet mouth 14 of the hopper 11, preventing the material from forming connections and accumulations.

Said outlet mouth 14 is associated with a screw 15, with a substantially horizontal axis, the function of which is to extract a desired quantity of material from the hopper 11 and feed it towards another processing device or plant located downstream, and not shown here.

The screw 15 is associated with its own motor 16 whose speed of rotation, with a desired reduction ratio, determines the speed of rotation of the screw 15 and hence the quantity of material unloaded from the hopper 11 in the unit of time.

In cooperation with the structure which supports the hopper 11 and the screw 15, there is a weighing system 18 comprising a plurality of load cells 19, normally from two to four (three in the case shown here) associated with a conversion unit 20 suitable to calculate a value of weight from the electric signals sent by the load cells 19.

The device 10 also comprises a PLC-type processing and control unit 21 able to control and manage the gravimetric metering procedure.

To be more exact, the unit 21 is suitable to receive as input the setting signals in order to set and control the system through an operator interface 22, and to intervene in feedback on the extraction system in the event that the quantity of material unloaded, as detected by the weighing system 18, does not correspond to the setting value set by the operator.

An inlet of the unit 21 is connected, by means of a communication interface 23, to the unit 20 which calculates the value of weight, or more correctly, the weight losses, of the hopper 11/screw 15 system starting from the electric signals emitted by the load cells 19. Said value relating to weight is sent to the unit 21 periodically according to a pre-defined sampling interval.

In the event that the weight loss values, and hence the quantity of material unloaded from the hopper 11 in the unit of time, are not coherent with the pre-set value, the unit 21 intervenes in feedback and acts, by means of a communication interface 24, on a unit 25 to regulate the speed of the motor 16 of the screw 15.

Therefore, based on this comparison and regulation, which are performed with a frequency equal to the frequency of sampling with which the weight is detected, the unit 21 is able to constantly maintain a desired pattern of the unloading of the material from the hopper 11, keeping a constant outlet flow corresponding to the correct quantity which must be fed to the device or plant located downstream.

A communication interface 24 and a regulation unit 25 are also connected, in this case, to the unit 21 to control the speed of the motor 13 of the stirrer 12.

The components associated with the motor 13 could be omitted, however, and the stirrer 12 in this case would function at a fixed speed.

In the preferential embodiment, the regulation units 25 are inverters.

According to a variant, the motors 13 and 16 are direct current motors and the regulation units 25 are able to regulate the current fed to the relative motors in order to condition the speed thereof.

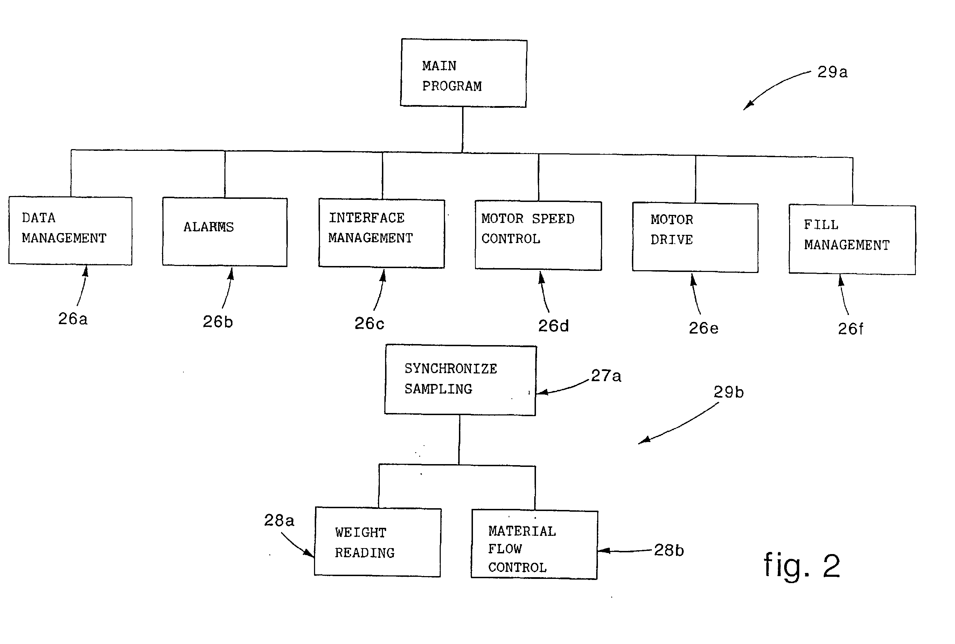

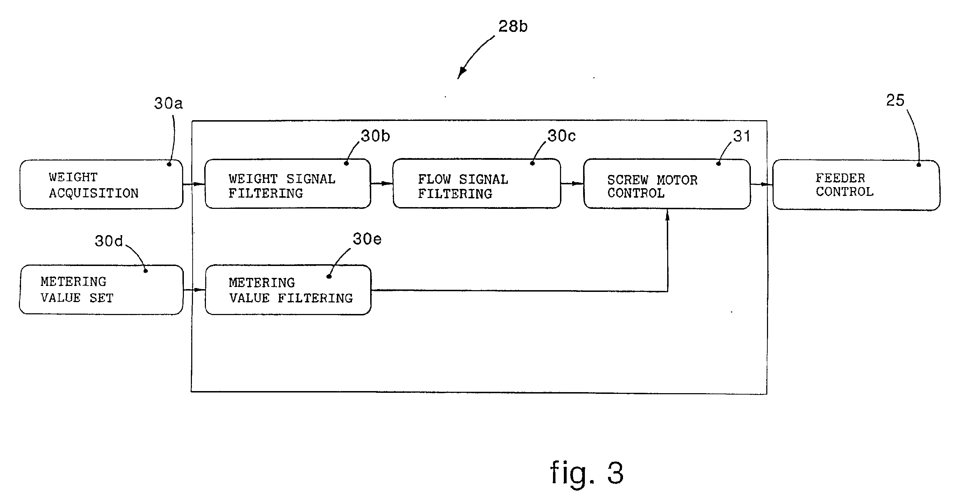

The principle with which the PLC-type unit 21 carries out the comparison and regulation is shown schematically in the flow charts in Figs. 2 and 3.

As can be seen in Fig. 2, the control method according to the invention provides a main procedure, identified in general by the block 29a and carried out cyclically, which comprises a plurality of sub-procedures to manage the various components of the device 10 and to interface with the outside.

To be more exact, said sub-procedures comprise: a block 26a to manage the data exchanged with the outside devices, a block 26b wherein all the types of alarm are managed which can occur during functioning, a block 26c relating to the management of the interfaces, a block 26d suitable to calculate the parameters and control the speed of the motor 16 of the screw 15, a block 26e which manages the functioning of the motors 16 and 13, and a block 26f which manages the filling steps of the hopper 11 during which the gravimetric control is excluded.

The control procedure also provides a calculation procedure, identified in general by the block 29b, which is activated at the same frequency at which the weight is detected as defined by the sampling interval, for example in the range of 50 ms, as established by the synchronization block 27a.

Said calculation procedure provides two operations performed simultaneously with every sampling period: an operation indicated by the block 28a, to acquire the value of weight as found from the electric signals transmitted by the load cells 19 and converted by the block 20, and an operation, indicated by the block 28b, to control the flow of material, to compare it with the setting value, and possibly to supply a command in feedback to intervene on the motor 16 of the screw 15.

Such operation 28b is made clear in the flow chart in Fig. 3.

It comprises a step 30a wherein the weight is acquired by means of the signals of the load cells 19, a step 30b wherein said weight signal is filtered, and a step 30c wherein the signal relating to the flow of material found from said weight signal is filtered.

In parallel, the setting value, set by the operator in a step 30a, is subjected to filtering in a step 30e.

Then, the filtered signal relating to the flow of material detected with the sampling frequency and the filtered signal relating to the setting value are sent together to a block 31 able to compare said values; said block 31 is able to calculate by how much the speed of the motor 16 of the screw 15 has to be modified so that the signal relating to the flow of material coincides with the setting signal.

The result of this calculation is then sent to the inverter 25 suitable to intervene on the motor 16 of the screw 15, and hence on the entire feed and metering system, to restore the correct functioning.

Said control and regulation procedure, as we have said, is repeated at the frequency of sampling with every subsequent detection of the quantity of material, in weight, unloaded from the hopper 11.

It is obvious that modifications and variants may be made to the metering method and relative device as described heretofore, all of which shall come within the field of protection of the present invention.

## Claims

1. Metering method for substances, for example raw materials, semi-finished pieces or ingredients in a mixture, applied to a metering device comprising at least a container (11) to feed the material, extraction means normally of a screw-type (15) associated in the lower part with the outlet of said container (11) and weight detection means (19) associated at least with said container (11) and able to detect the weight losses caused by the discharge of the material, **characterized in that** it comprises the following steps:
- at least a step of filtering the signals arriving from said weight detection means (19);
- obtaining from said weight signals the quantity of material unloaded from said container (11) in terms of material flow (unit of weight per unit of time, for example kg/h), and filtering the flow signal thus obtained;
- sending said filtered flow signal, together with a filtered signal relating to the set point metering value set by the operator, to a unit to regulate the speed of rotation of said screw extraction means (15);
- comparing, by said regulation unit, the value relating to the flow signal with the set point value, to output in feedback a signal to possibly correct the speed of rotation of said screw extraction means (15) in the event that said values be different.

2. Metering device for substances, for example raw materials, semi-finished pieces or ingredients in a mixture, comprising at least a container (11) to feed the material, extraction means (15) associated in the lower part with the outlet of said container (11) and weight detection means (19) associated at least with said container (11) and able to detect the weight losses caused by the discharge of the material, **characterized in that** said weight detection means (19) are connected to an inlet of a PLC-type processing and control unit (21) by means of at least a signal conversion unit (20) and at least a communication interface unit (23), and an outlet of said PLC-type processing and control unit (21) is connected to a motor (16) of said extraction means (15) by means of at least a communication interface unit (24) and a device (25) to regulate the speed of said motor (16).

3. Device as in claim 2, **characterized in that** said extraction means (15) are of the screw type.

4. Device as in claim 2, **characterized in that** said extraction means (15) are of the belt type.

5. Device as in claim 2, **characterized in that** said speed regulation device is an inverter (25).

6. Device as in any claim from 2 to 5 inclusive, **characterized in that** said PLC-type processing unit (21) is suitable to receive the values of weight as obtained by the electric signals transmitted by said load cells (19), to process them and provide at output a command signal to regulate at least the speed of said motor (16) of the screw (15) by means of said inverter (25).

7. Device as in claim 2, wherein said container (11) is associated with a stirrer member (12) provided with its own motor (13), **characterized in that** an outlet of said PLC-type processing and control unit (21) is connected to the motor (13) of said stirrer member (21) by means of at least a communication interface unit (24) and a speed regulation device (25).

8. Device as in any claim from 2 to 7 inclusive, **characterized in that** said PLC-type processing unit (21) is suitable to activate periodic filling cycles to fill said container (11), de-activating the weight detection means (19), when the residual material inside the container (11) has reached a pre-set minimum level and until the residual material inside the container (11) reaches a pre-determined maximum level.
